Europäisches Patentamt

European Patent Office

Office européen des brevets

(19)

(11) Veröffentlichungsnummer : **0 222 114**
**B1**

(12) **EUROPÄISCHE PATENTSCHRIFT**

(45) Veröffentlichungstag der Patentschrift :
26.04.89

(21) Anmeldenummer : 86112998.9

(22) Anmeldetag : 20.09.86

(51) Int. Cl.⁴ : **F 01 L  1/04**

(54) **Nockenwelle für Brennkraftmaschine.**

(30) Priorität : 11.10.85 DE 3536296

(43) Veröffentlichungstag der Anmeldung :
20.05.87 Patentblatt 87/21

(45) Bekanntmachung des Hinweises auf die Patenterteilung : 26.04.89 Patentblatt 89/17

(84) Benannte Vertragsstaaten :
FR GB IT SE

(56) Entgegenhaltungen :
DE–A– 2 336 241
DE–A– 2 838 995
DE–A– 3 321 846
DE–U– 8 426 999

(73) Patentinhaber : **Etablissement Supervis**
**Altenbachstrasse 17**
**FL-9490 Vaduz (LI)**

(72) Erfinder : **Matt, Lukas**
**Flux 555**
**FL-9492 Eschen (LI)**

(74) Vertreter : **Hefel, Herbert, Dipl.-Ing.**
**Egelseestrasse 65a Postfach 61**
**A-6800 Feldkirch (AT)**

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

## Beschreibung

Die Erfindung bezieht sich auf eine Nockenwelle mit einer Welle und mit mindestens einem auf die Welle aufgeschobenen und mit ihr durch Löten fest verbundenen Nocken, der eine axiale Bohrung mit zum Profil der Welle korrespondierendem Querschnitt aufweist, wobei der Durchmesser der kreisrunden Bohrung des Nockens um ein geringes Maß größer ist als der Durchmesser der einen kreisrunden Querschnitt aufweisenden Welle, so daß der Nocken auf die Welle ohne Kraftaufwand aufschiebbar ist — Welle und Nocken besitzen also eine Spielpassung — und die Wandung der Bohrung des Nockens und/oder der den Nocken aufnehmende Abschnitt der Welle mindestens einen nutenartigen Einstich aufweist, und in diesen Einstich vor dem Zusammenfügen von Nocken und Welle durch Aufschmelzen verflüssigbares Lot eingebracht ist.

Nockenwellen für Brennkraftmaschinen, bei welchen die Nocken und die Welle getrennt gefertigt und dann zu einer baulichen Einheit zusammengefügt werden, sind bekannt. Bei einer bekannten Konstruktion dieser Art (DE-A-28 38 995 und DE-A-33 21 846) ist die Welle mit mehreren axial verlaufenden Nuten versehen und die Bohrung des Nockens besitzt dazu einen radialen Vorsprung, der in diese Nut eingreift, wobei die Bohrung des Nockens die Welle mit Spiel umfaßt, dabei jedoch ist der erwähnte Vorsprung in seiner radialen Erstreckung so groß bemessen, daß Nocken und Wellen unter Reibungsschluß zusammenfügbar sind und ineinander in Eingriff stehen. Der infolge des erwähnten Spieles vorhandene Spalt wird nach dem Zusammenfügen von Nocken und Welle von außen her mit Hartlot gefüllt. Umfangsseitig sind dabei auf der Welle so viel Nuten angebracht wie es der Nockenphasenlage für den jeweiligen Einsatzzweck entspricht. Diese Konstruktion ist insofern nicht zweckmäßig, da es eines aufwendigen Arbeitsvorganges bedarf, die Bohrungen der Nocken mit den nach innen ragenden radial ausgerichteten Vorsprüngen zu fertigen. Diese Vorsprünge müssen nicht nur hinsichtlich ihrer radialen Abmessung sehr genau gefertigt sein, sie müssen auch, was ihre Winkellage zur Achse des Nockens betrifft, sehr exakt positioniert sein.

Bei einer anderen bekannten Konstruktionsart (DE-A-32 47 636, DE-A-33 01 749 und DE-A-32 27 693) sind die Nocken auf einer einen rotationssymmetrischen Querschnitt aufweisenden Welle in einem Preßsitz aufgezogen und aufgeschrumpft. Damit der Schrumpfsitz einen ausreichenden Halt bei der betriebsmäßigen Beanspruchung der Nockenwelle gewährleisten kann, müssen die zu paarenden Teile eine Preßsitzpassung besitzen. Das bedeutet, daß bei der Fertigung der Nockenwelle der Nocken mit großem Kraftaufwand über fast die halbe Länge der Welle geschoben werden muß, wobei es sich nicht vermeiden läßt, daß der durch den Nocken überfahrene Teil der Welle an seiner Oberfläche verletzt wird mit der Folge, daß die nachfolgenden, auf diesen Abschnitt aufzuschiebenden Nocken bereits geänderte Passungsverhältnisse vorfinden.

Bekannt ist ferner eine Nockenwelle (DE-U1-84 26 999) mit einem die Welle bildenden Tragrohr und auf dieses aufgeschobenen und mit ihm stoffschlüssig verbundenen, eine dem Tragrohraußenquerschnitt entsprechende Öffnung aufweisenden Nockenscheiben, wobei die Außenseiten des Tragrohres zumindest im Bereich der Nockenscheiben und die Öffnungswand der Nockenscheiben metallisch sind. Die Verbindung von Nockenscheiben und Tragrohr ist lasergeschweißt bzw. lasergelötet. Als zweckmäßigen Lösungsvorschlag wird dabei hier vorgesehen, daß die Nockenscheiben und das Tragrohr von dessen Innerem her lasergeschweißt bzw. lasergelötet sind. Bei dieser lasergeschweißten bzw. lasergelöteten Nockenwelle können die Öffnungswand der Nockenscheiben und die von den letzteren umschlossenen Umfangsbereiche des Tragrohres aus für das Löten geeigneten Werkstoffen bestehen, doch ist es auch möglich, zwischen die Nockenscheiben und das Tragrohr eine Lötfolie einzulegen oder aus Lot bestehende Ringe beidseitig einer jeden Nockenscheibe auf dem Tragrohr anzuordnen.

Mit Laserstrahlen können hochwertige metallische Verbindungen hergestellt werden, worüber kein Zweifel besteht. Allerdings ist diese Art der Verbindung technologisch gesehen außerordentlich aufwendig und bei einer Serienfertigung noch kaum praktisch einzusetzen. Bei dieser bekannten Konstruktion ist vorgesehen, entweder den Laserstrahl um die Welle herumzuführen oder die Welle mit den auf sie aufgeschobenen Nockenscheiben gegenüber dem Laserstrahl zu drehen, woraus schon ein Teil der hier zu erwartenden Schwierigkeiten resultieren. Ferner muß die Oberfläche der Welle oder des Tragrohres bei dieser vorbekannten Konstruktion geschliffen und gegebenenfalls noch zusätzlich verkupfert werden. Bei der Herstellung einer Nockenwelle muß außer der festen Verbindung zwischen Welle und Nocken darauf geachtet werden, daß der Nocken winkelgerecht liegt, damit die fertige Welle nicht nachbearbeitet werden muß. Um die Nocken gegenüber der Welle sowohl in axialer Richtung wie auch hinsichtlich ihrer gegenseitigen Winkellage vor der Verbindung zu fixieren, wird hier bei dieser bekannten Konstruktion eine schalenförmige Vorrichtung vorgesehen, in welche die Wellen mit den aufgeschobenen Nocken eingelegt werden. In diesem Fall ist es aber nurmehr möglich, vom Inneren der Welle her zu schweißen oder zu löten, was voraussetzt, daß die Welle als hohles Rohr ausgebildet ist und ferner die Laserkanone so ausgestattet sein muß, daß der Laserstrahl um einen Winkel von mindestens 90° umgelenkt werden kann. Dies setzt außerordentlich teure technologische Einrichtungen voraus, die nur labormäßig, nicht aber für eine fabriksmäßige Serienfertigung verwendet werden können.

Von diesem Stand der Technik ausgehend strebt die Erfindung danach, die Fertigung einer solchen Nockenwelle zu vereinfachen und dabei gleichzeitig ihre Qualität zu verbessern, was erfindungsgemäß dadurch gelingt, daß in den nutenartigen Einstich ein vorzugsweise längsgeschlitzter, ringförmiger Träger eingelegt ist, der Höhlungen, Taschen, Vertiefungen o. dgl. aufweist, in welche Lot, vorzugsweise pastöses Lot, eingefügt ist und daß der Außendurchmesser des in den Einstich der Welle eingefügten ringförmigen Trägers bzw. dessen äußerer Hüllkreis um ein geringes Maß größer ist als der Durchmesser der Bohrung des Nockens, so daß zwischen Nocken und Träger bzw. Welle eine Preßsitzpassung vorhanden ist.

Dank des erfindungsgemäßen Vorschlages bedarf die Welle keiner speziellen Oberflächenbearbeitung, wie Schleifen und/oder Verkupfern. Zwischen der Bohrung des Nockens und der Querschnittskontur der Welle genügt eine relativ grobe Passung, so daß der Nocken ohne besonderen Kraftaufwand über die Welle bis zu seinem vorgesehenen Sitz verschiebbar ist. Durch den ringförmigen Träger und dessen Abmessungen bezüglich der Welle erhält der Nocken auf der Welle einen festen Sitz und kann so ohne äußere Hilfsmittel winkelgerecht positioniert werden, dabei ist bereits in oder an diesem Träger das für die Verbindung vorgesehene Lot angeordnet. Dadurch entfallen die Lotzubringungs- und Lotdosierungsprobleme. Ein weiterer Vorteil dieses vorzugsweise elastischen Lotringträgers besteht darin, daß dieser Ring die Nocke auf der Welle zentriert und deshalb ein konstanter Lotspalt erzielt wird. Dieser konstante Lotspalt ist wesentlich für eine qualitativ hochwertige Befestigung. Zudem wird durch diese Zentrierung der notwendige Aufwand für das Fertigschleifen der Nocken auf einem absoluten Minimum gehalten.

Die so vorbereitete Welle wird in einen Ofen eingelegt und dort so weit erhitzt, daß das Lot sich verflüssigt und verteilt, ohne daß dabei besondere Vorkehrungen getroffen werden müssen, die Nocken in ihrer vorgegebenen winkelgerechten Position zu halten. Dadurch wird die Montage ganz erheblich vereinfacht und auch die Herstellung, denn der aufgeschobene und winkelgerecht positionierte Nocken behält seine Lage gegenüber der Welle bei, auch wenn diese in der Folge vor dem Aufschmelzen des Lotes mehrfach manipuliert wird. Das so vorbereitete Werkstück wird nun in den Ofen eingehängt und dort anschließend erhitzt, es sind keine besonderen Maßnahmen notwendig, während der Erhitzung und nachfolgenden Abkühlung für die winkelgerechte Lage der Nocken besondere Maßnahmen zu treffen. Es stellt, wie Versuche zeigen, keinerlei technologische Schwierigkeit dar, das für die Verbindung notwendige Lot an oder in diesem Träger anzubringen, dies kann mit ganz einfachen Mitteln automatisiert werden.

Ausführungsformen der Erfindung veranschaulichen die Zeichnungen. Es zeigen:

Fig. 1 einen Abschnitt einer Nockenwelle in Schrägsicht;

Fig. 2 einen Längsschnitt durch die Nockenwelle nach Fig. 1 im Bereich eines Nockens nach dem Zusammenfügen der Teile und

Fig. 3 nach einem weiteren Verfahrens- oder Bearbeitungsschritt;

Fig. 4, 5 und 6 einen ringförmigen Träger für die Aufnahme von Lot in Ansicht, Seitensicht und Schnitt;

Fig. 7 und 8 andere Ausführungsform für einen Träger für die Aufnahme von Lot in Ansicht und Seitensicht;

Fig. 9 einen Längsschnitt durch eine gegenüber den Fig. 2 und 3 abweichende Ausgestaltung;

Fig. 10 den Querschnitt der Welle und

Fig. 11 die Ansicht eines Nockens.

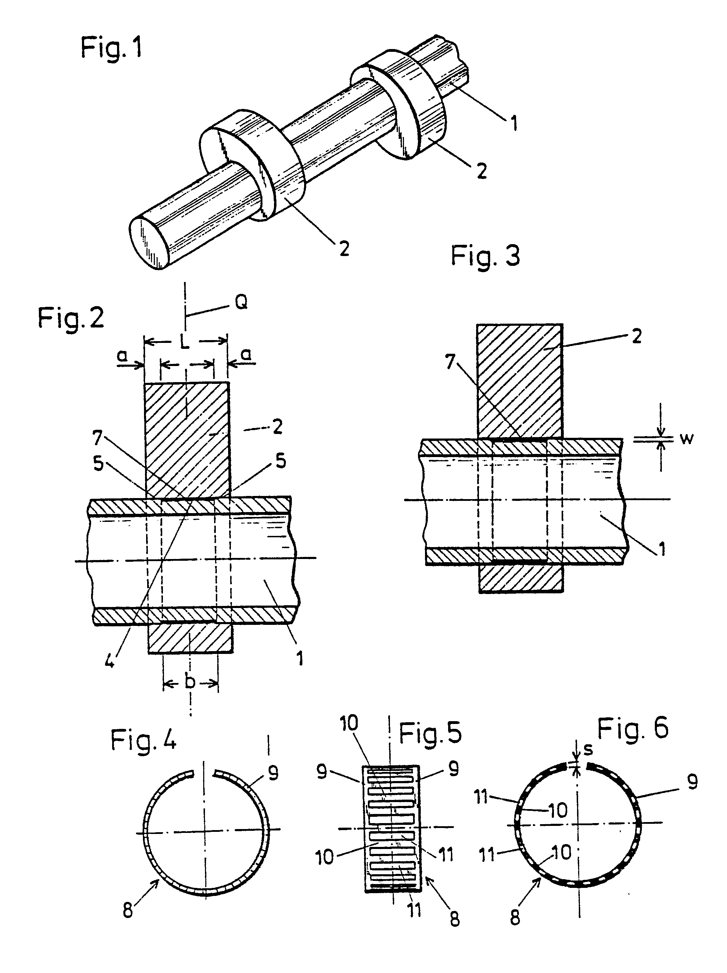

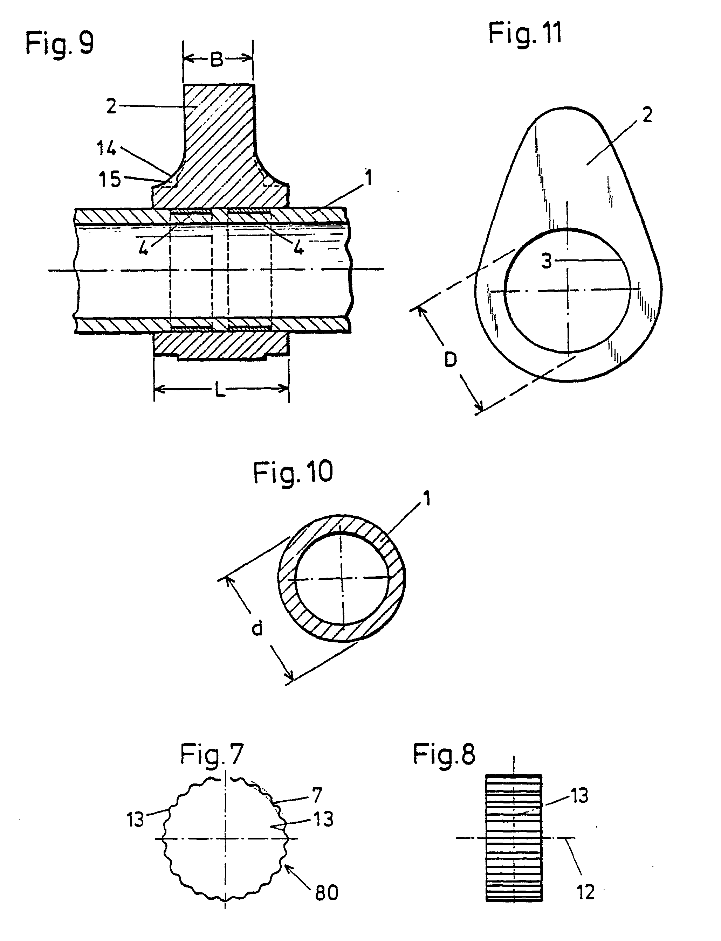

Die Nockenwelle nach Fig. 1 besteht aus der durch ein Rohr gebildeten Welle 1 und den auf dieser Welle 1 befestigten Nocken 2, die voneinander in Achsrichtung der Welle 1 distanziert sind und die gegeneinander darüberhinaus noch winkelversetzt sind, wie es der jeweiligen Phasenlage der zu betätigenden motorischen Elemente entspricht, für die die Nockenwelle vorgesehen ist. Das als Welle 1 dienende Rohr besitzt, wie Fig. 10 zeigt, einen Kreisringquerschnitt, der Nocken 2 (Fig. 11) zur Aufnahme der Welle 1 eine kreisförmige Bohrung 3. Der Nocken 2 kann gesintert sein oder aus einem geeigneten Material ausgestanzt werden. Auch andere Herstellungsformen sind zur Fertigung des Nockens geeignet.

Der Durchmesser D der Bohrung 3 des Nockens 2 ist um ein geringes Maß größer als der Durchmesser d der Welle 1, so daß der Nocken 2 ohne besonderen Kraftaufwand infolge des vorhandenen geringfügigen Spieles auf die Welle 1 aufgeschoben werden kann. Die Passung von Bohrung 3 und Welle 1 liegt dabei zweckmäßigerweise im Toleranzbereich von H7-H11 bzw. h8-h11. An der Stelle, an welcher der Nocken 2 auf der Welle 1 zu fixieren und zu befestigen ist, besitzt die Welle 1 einen nutenartigen, umlaufenden Einstich 4, dessen in Achsrichtung der Welle 1 gemessene Breite b kleiner ist als die Achslänge L der Bohrung 3 des Nockens 2, wobei der Nocken 2 bezüglich dieses Einstiches 4 so ausgerichtet ist, daß die Bohrung 3 den Einstich 4 beidseitig um etwa das gleiche Maß a überragt, gegenüber einer zum Einstich 4 mittig liegenden Querschnittsebene Q also in etwa symmetrisch liegt. Dieser Einstich 4 kann aber auch in der Wandung der Bohrung 3 des Nockens 2 vorgesehen werden oder aber auch in beiden zu paarenden Teilen. Letztere Maßnahme erscheint jedoch aus rein fertigungstechnischen Gründen nicht zweckmäßig zu sein.

Bevor nun bei der Montage und Fertigung der Nockenwelle der Nocken 2 in der beschriebenen Weise auf die Welle 1 aufgeschoben und positioniert wird, wird in den nutenartigen Einstich 4 Lot eingebracht, das durch Aufschmelzen verflüssigbar ist. Zweckmäßigerweise wird hier ein Hartlot verwendet werden. Erfahrungsgemäß ist die Handhabung pastöser Massen bei der Montage im Zuge einer industriellen Serienfertigung nicht zweckmäßig. Um dieses « Handling » zu erleichtern, ist erfindungsgemäß vorgesehen, einen Träger für diese pastöse Masse zu verwenden, der hier als längsgeschlitzter, ringförmiger Träger ausgebildet ist mit Taschen für die Aufnahme dieses Lots 7. Einen solchen Träger zeigen die Fig. 4 bis 6 in Ansicht, Seitensicht und Querschnitt. Dieser Träger 8 besitzt randseitig ringförmige Stege 9, die über voneinander distanzierte Holme 10 miteinander verbunden sind. Ein solcher Träger kann beispielsweise aus einem Blechstreifen entsprechender Stärke s ausgestanzt und anschließend zu einem Ring gebogen werden. Zwischen den einzelnen Holmen 10 sind Hohlräume 11 ausgespart, die dann mit dem erwähnten Lot in einem eigenen automatisierbaren Arbeitsprozeß gefüllt werden können, wobei auch dieser ursprünglich langgestreckte Streifen zu einem geschlitzten Ring gebogen wird (Fig. 4 bis 6). Der so vorbereitete Träger 8 wird dann bei der Montage etwas aufgeweitet und von der Seite her in den nutartigen Einstich 4 eingefügt, worauf dann anschließend der Nocken 2 aufgeschoben wird. Die Stärke s des Trägers 8 ist auf die Tiefe oder Höhe h des nutartigen Einstiches 4 so abgestellt, daß das Aufschieben des Nockens 2 auf den mit Lot gefüllten Träger 8 nur unter Krafteinwirkung und Kraftaufwand möglich ist. Bei einem Träger 8 der in den Fig. 4 bis 6 dargestellten Art müssen im Bereich der seitlichen Stege 9, falls der Träger 8 entsprechend stark zur Erzielung eines Preßsitzes zwischen Rohr 1 und Nocken 2 bemessen ist, für sorglich zusätzlich konstruktive Maßnahmen vorgesehen sein, um den seitlichen Austritt des aufzuschmelzenden Lotes 7 in die kapillarförmigen Ringspalte 5 (Fig. 2) zu ermöglichen und sicherzustellen.

Diesem zusätzlichen Aufwand bei einem Träger nach den Fig. 4 bis 6 kann dadurch begegnet werden, wenn als Träger 80 ein zu einem offenen oder geschlitzten Ring gebogener Federstahlstreifen verwendet wird, der in sich gewellt ist, wobei die Achsen der Wellungen 13 im wesentlichen parallel zur Achse 12 des ringförmigen Trägers 80 (Fig. 7, 8) verlaufen. Die durch die Wellungen 13 gebildeten achsparallelen Rinnen dienen dann zur Aufnahme des pastösen Lots, wobei diese seitlich offenen Rinnen den sicheren Ausfluß des verflüssigten Lotes sicherstellen, wenn die so vorbereitete Nockenwelle in den Ofen eingebracht wird. Auch hier ist die Höhe der Wellung 13 so auf die Tiefe oder Höhe w des nutenartigen Einstiches 4 abstellbar, daß der Nocken 2 nach dem Einlegen des Trägers 80 in den Einstich 4 nur unter Kraftaufwand einschiebbar ist, so daß sich hier — und zwar nur im Fixierungsbereich des Nockens 2 auf der Welle 1 — zwischen den zu paarenden Teilen ein Preßsitz ergibt, der zumindest die provisorische Justierung und Fixierung des Nockens ermöglicht, bis das Lot aufgeschmolzen und wieder erhärtet ist. Aufgrund der Verwendung von Federstahl in der beschriebenen Form für den Träger 80 in Verbindung mit dem Lot 7 kann der Preßsitz so gestaltet sein, daß die dadurch hervorgerufenen Reibungskräfte einen nicht unwesentlichen Teil der betriebsmäßig auftretenden Belastungen aufnehmen können. Um die Montage des Nockens beim Einsatz eines solchen, aus gewelltem Federstahl gefertigten Trägers zu erleichtern, sind dessen Ränder abgeflacht oder keilförmig abgeschrägt. Wenn in Fig. 7 der ringförmige Träger 80 mit offenen, einander gegenüberliegenden Enden dargestellt ist, so ist zu vermerken, daß dieser Träger 80 auch so ausgebildet sein kann, daß sich bei unbelastetem Ring die freien Enden gegenseitig etwas überdecken. Der Übersichtlichkeit wegen wurde jedoch der Träger 80 in Fig. 7 als offener Ring dargestellt.

Im Zusammenhang mit dem Träger, der in den Fig. 4 bis 6 gezeigt und beschrieben worden ist, ist noch ergänzend zu erwähnen, daß der Querschnitt des Blechstreifens, aus dem der ringförmige Träger gebogen wird, zweckmäßigerweise einen geringen keilförmigen Anzug besitzt, was die Montage des Nockens erleichtert.

Um zwischen Nocken 2 und Welle 1 eine möglichst intensive und sichere Verbindung zu erzielen, liegt es im Rahmen der Erfindung, pro Nocken 2 mehrere Einstiche 4 vorzusehen (Fig. 9), wobei zweckmäßigerweise der Nocken 2 einen verbreiterten Fuß erhält, d. h., die Länge L der Bohrung 3 des Nockens 2 ist größer als die Breite B des auskragenden Teils des Nockens.

Bei einem solchen verbreiterten Fuß des Nockens ist es grundsätzlich möglich, die seitlich ausladende Schulter 14 so zu gestalten, daß sie als Lageraufflläche für die Nockenwelle dienen kann. Die strichlierte Linie 15 deutet diese Möglichkeit an.

Die in der beschriebenen Weise vorbereitete Nockenwelle wird nun nach entsprechender radialer Positionierung der Nocken 2 in einem Ofen, vorzugsweise in einem Vakuumofen bis zur Verflüssigung des Lotes (ca. 620 bis 1100 °C) erhitzt. Das so erhitzte und mit Flußmittel versetzte Lot verflüssigt sich und verbindet die beiden Teile miteinander, wobei das flüssiggewordene Lot in den durch die enge Passung zwischen Welle 1 und Nocken 2 gebildeten kapillaren Ringspalt 5 wandert und diesen Spalt füllt, was nach Abkühlung der Welle eine optimale Verbindung sicherstellt und gewährleistet.

Fig. 3 zeigt den Längsschnitt nach dem Aufschmelzen und nachfolgenden Abkühlen des Lots, das in den erwähnten kapillaren Ringspalt 5 eingeflossen und dort erstarrt ist.

## Patentansprüche

1. Nockenwelle mit einer Welle (1) und mit mindestens einem auf die Welle aufgeschobenen und mit ihr durch Löten fest verbundenen Nocken (2), der eine axiale Bohrung mit zum Profil der Welle korrespondierendem Querschnitt aufweist, wobei der Durchmesser (D) der kreisrunden Bohrung (3) des Nockens (2) um ein geringes Maß größer ist als der Durchmesser (d) der einen kreisrunden Querschnitt aufweisenden Welle (1), so daß der Nocken (2) auf die Welle (1) ohne Kraftaufwand aufschiebbar ist — Welle (1) und Nocken (2) besitzen also eine Spielpassung — und die Wandung der Bohrung (3) des Nockens (2) und/oder der den Nocken (2) aufnehmende Abschnitt der Welle (1) mindestens einen nutenartigen Einstich (4) aufweist, und in diesen Einstich (4) vor dem Zusammenfügen von Nocken (2) und Welle (1) durch Aufschmelzen verflüssigbares Lot (7) eingebracht ist, dadurch gekennzeichnet, daß in den nutenartigen Einstich (4) ein vorzugsweise längsgeschlitzter, ringförmiger Träger (8, 80) eingelegt ist, der Höhlungen, Taschen, Vertiefungen od. dgl. aufweist, in welche Lot (7) vorzugsweise pastöses Lot (7) eingefügt ist und daß der Außendurchmesser des in den Einstich (4) der Welle (1) eingefügten ringförmigen Trägers (8, 80) bzw. dessen äußerer Hüllkreis um ein geringes Maß größer ist als der Durchmesser (D) der Bohrung (3) des Nockens (2), so daß zwischen Nocken (2) und Träger bzw. Welle eine Preßsitzpassung vorhanden ist.

2. Nockenwelle nach Anspruch 1, dadurch gekennzeichnet, daß der ringförmige Träger (80) aus einem Federblechstreifen gebildet ist und der Federblechstreifen in sich gewellt ist, wobei die Achsen der Wellungen (13) im wesentlichen parallel zur Achse (12) des ringförmigen Trägers (80) verlaufen und das Lot (7) in die durch die Wellungen (13) gebildeten rinnenförmigen Taschen eingebracht ist (Fig. 7, 8).

3. Nockenwelle nach einem der Ansprüche 1 oder 2, dadurch gekennzeichnet, daß die axiale Länge (L) der Bohrung (3) des Nockens (2) größer ist als die Breite (B) des auskragenden Abschnittes des Nockens (2) und in dem von der Bohrung (3) des Nockens (2) überdeckten Bereich der Welle (1) mehrere nebeneinander liegende nutenartige Einstiche (4) vorhanden sind (Fig. 9).

4. Nockenwelle nach Anspruch 2, dadurch gekennzeichnet, daß der aus einem gewellten Federblechstreifen gebildete ringförmige Träger (80) abgeflachte oder keilförmig abgeschrägte Ränder besitzt.

5. Nockenwelle nach Anspruch 1, dadurch gekennzeichnet, daß die in Achsrichtung gemessene Breite (B) des in der Welle (1) vorgesehenen, nutenartigen Einstiches (4) kleiner ist als die Breite (L) des Nockens (2).

## Claims

1. A camshaft having a shaft (1) and at least one cam (2) pushed over the shaft and connected thereto by soldering, the cam having an axial bore with a cross-section corresponding to the profile of the shaft, the diameter (D) of the circular bore (3) of the cam (2) being larger by a minimal amount than the diameter (d) of the shaft (1) having a circular cross-section, so that the cam (2) may be pushed on to the shaft (1) without the exertion of force — the shaft (1) and cam (2) thus having a clearance fit — and the wall of the bore (3) of the cam (2) and/or of the portion of the shaft (1) receiving the cam (2) having at least one groove-like recess (4), liquefiable solder being introduced into the said recess (4) before the cam (2) and the shaft (1) are assembled by melting, characterised in that an annular support (8, 80), which is slit preferably longitudinally, is inserted in the groove-like recess (4), the said support having hollows, pockets, indentations or the like, into which solder (7), preferably in the form of a paste (7), is inserted, and in that the outer diameter of the annular support (8, 80) inserted into the recess (4) of the shaft (1) or the outer circumference of the said support is greater, by a small amount, than the diameter (D) of the bore (3) of the cam (2), so that a force fit exists between the cam (2) and the support or shaft.

2. A camshaft according to claim 1, characterised in that the annular support (80) is formed of a spring sheet-metal strip and the said spring sheet-metal strip is corrugated per se, the axes of the corrugations (13) extending substantially parallel to the axis (12) of the annular support (80) and the solder (7) being inserted in the groove-like pockets formed by the corrugations (13) (Fig. 7, 8).

3. A camshaft according to claims 1 or 2, characterised in that the axial length (L) of the bore (3) of the cam (2) is greater than the width (B) of the projecting portion of the cam (2) and there are a plurality of adjacent groove-like recesses (4) in the region of the shaft (1) overlapped by the bore (3) of the cam (2).

4. A camshaft according to claim 2, characterised in that the annular support (80) formed from a corrugated spring sheet-metal strip has edges bevelled in a flattened or wedge-shaped manner.

5. A camshaft according to claim 1, characterised in that the width (B), measured in the axial direction, of the groove-like recess (4) provided in the shaft (1) is smaller than the width (L) of the cam (2).

## Revendications

1. Arbre à cames, avec un arbre (1) et avec au moins une came (2) enfilée sur l'arbre et rendue solidaire de celui-ci par brasage, cette came comportant un alésage axial dont la section transversale correspond au profil de l'arbre, le diamètre (D) de l'alésage circulaire (3) de la came (2) étant légèrement supérieur au diamètre (d) de l'arbre (1) comportant une section transversale circulaire, de sorte que la came (2) peut être enfilée sans effort sur l'arbre (1), l'arbre (1) et la came (2) présentant ainsi un ajustement avec du jeu, et la paroi de l'alésage (3) de la came (2) et/ou la paroi du tronçon de l'arbre (1) recevant la came (2) comportant au moins une entaille (4) en forme de gorge, entaille (4) dans laquelle, avant l'assemblage de la came (2) et de l'arbre (1), est mis en place pour le brasage du métal d'apport (7) susceptible d'être liquéfié par fusion, arbre à cames caractérisé en ce que, dans l'entaille (4) en forme de gorge est mis en place un support de forme annulaire (8, 80), de préférence fendu longitudinalement, comportant des creux, des poches, des cavités ou analogues, dans lesquels est introduit du métal d'apport de brasage (7), de préférence du métal d'apport pâteux, cependant que le diamètre externe du support, de forme annulaire (8, 80) inséré dans l'entaille (4) de l'arbre (1), ou bien le diamètre du cercle-enveloppe de ce support, est légèrement supérieur au diamètre (D) de l'alésage (3) de la came (2), de sorte qu'entre la came (2) et le support ou l'arbre, on a un ajustement serré.

2. Arbre à cames selon la revendication 1, caractérisé en ce que le support de forme annulaire (80) est réalisé à partir d'une bande de tôle à ressort, et cette tôle est ondulée, les axes de ses ondulations (13) étant en pratique parallèles à l'axe (12) du support de forme annulaire (80), et le métal d'apport (7) étant inséré dans les poches en forme de rigoles constituées par ces ondulations (13) (figures 7, 8).

3. Arbre à cames selon une des revendications 1 ou 2, caractérisé en ce que la longueur axiale (L) de l'alésage (3) de la came (2) est supérieure à la largeur (B) de la partie en saillie de la came (2), tandis que sur la partie de l'arbre (1) recouverte par l'alésage (3) de la came (2), il y a plusieurs entailles (4) en forme de gorges placées les unes à côté des autres (figure 9).

4. Arbre à cames selon la revendication 2, caractérisé en ce que le support de forme annulaire (80), réalisé à partir d'une bande de tôle à ressort, comporte des bordures aplaties ou chanfreinées en forme de coin.

5. Arbre à cames selon la revendication 1, caractérisé en ce que la largeur (B), mesurée en direction axiale, de l'entaille (4) en forme de gorge prévue dans l'arbre (1), est inférieure à la largeur (L) de la came (2).

Fig. 1

1

2

2

Fig. 2

Q

L

a

a

2

7

5

5

4

b

1

Fig. 3

2

7

w

1

Fig. 4

9

8

Fig. 5

10

9

9

10

11

11

8

Fig. 6

s

11

10

9

11

10

8

Fig. 9

Fig. 11

Fig. 10

Fig. 7

Fig. 8